# EUROPEAN PATENT APPLICATION

(11) **EP 2 184 091 A1**
(43) Date of publication of application: **12.05.2010**
(21) Application number: 08291031.6
(22) Date of filing: 05.11.2008
(51) Int. Cl.: A63F 13/12, G07F 17/32, H04L 29/06, H04L 29/08

(54) **Communication parameters leveler for users coupled to a telecommunication server or game server**

(71) Applicant: Alcatel Lucent, 75008 Paris (FR)
(72) Inventor: Beck, Michaël Andries Thomas, 2170 Merksem (Antwerp) (BE); Borghs, Eric Frans Elisa, 2440 Geel (BE); Six, Erwin Alfons Constant, 9270 Kalken (BE); Verschuere, Stefaan Bert Bea, 9052 Zwijnaarde (BE); Gilon, Edith Béatrice Louise, 1030 Brussels (BE); Hoet, Jeroen, 2500 Lier (BE); Boucque, Steven Gerard, 9090 Melle (BE); Gyselings, Tim, 2100 Deurne (BE)
(74) Representative: Narmon, Gisèle Marie Thérèse

(57) **Abstract**

A communication parameters leveler (CPL) for regulating communication between several users or players (Client 1, Client 2) located at geographically separated locations and a telecommunication server (GS) that is preferably a game server. The different quality of communication experienced by the different players may lead to disadvantage some players with respect to others. Therefore, in order to avoid disadvantaging some users with respect to others, the parameters leveler comprises a parameters detector for collecting the communication parameters of each player that connects to the game server, a parameters storage device for storing these parameters, and a network emulator for modifying the parameters of each user in order to obtain similar communication parameters for all the users coupled to the game server.

## Description

The present invention relates to a communication parameters leveler for regulating communication between a plurality of users and a telecommunication server.

When several users, located at geographically separated locations, are connected to a same telecommunication server, they may experience different quality of communication. This difference in the communication parameters of each user may lead to disadvantage some users with respect to others.

An object of the present invention is to provide a communication parameters leveler adapted to avoid disadvantaging some users with respect to others.

According to the invention, this object is achieved due to the fact that said communication parameters leveler comprises
- a parameters detector adapted to collect the communication parameters of each user that connects to said server,
- a parameters storage device adapted to store the communication parameters of all the users connected to said server,
- a network emulator adapted to modify the communication parameters of each user in order to obtain similar communication parameters for all the users coupled to said server.

The communication parameters leveler is a mechanism inserted in the chain between user and server to level-out the difference in communication characteristics between them.

Another characterizing embodiment of the present invention is that said network emulator is coupled to said parameters storage device for receiving therefrom the communication parameters of all the users connected to said server, that said network emulator is further adapted detect a first user showing the relatively worst quality of communication with said server, and that said network emulator is adapted to modify the communication parameters of each other user of said plurality so as to obtain similar communication parameters as those of said first user.

This feature is of general interest to any network solution provider who wants to improve the usability of its networks for applications requiring connection access of equal quality for all the users.

Also another characterizing embodiment of the present invention is that said communication parameters comprise the effective bandwidth, the latency and/or the Packet Error Rate PER of the user as connected to said server.

Users are located at geographically separated locations, so they experience different effective bandwidth, latency and/or packet loss in their interactions with the server. This gives some users an unfair advantage over others.

In more detail, the present invention is further **characterized in that** said network emulator is adapted to modify the communication parameters of each of said other users, showing a relatively better quality of communication with said server than said first user, by adding additional delay and/or packet loss to the connections of said other users with said server.

In this way, the server sees users with identical communication characteristics. The above unfair advantages are thereby erased.

Still another characterizing embodiment of the present invention is that parameters detector includes a probe connected to a plurality of probe responders, each probe responder being associated to a distinct user, and each probe responder is adapted to provide to said probe the communication parameters of the associated user.

Yet another characterizing embodiment of the present invention is that said plurality of users is coupled to said server through a telecommunication network, and that said communication parameters leveler is located in said telecommunication server.

In this case, only one instance of the communication parameters leveler is needed for all users, and influences from all parts of the network can be leveled.

In a preferred characterizing embodiment of the present invention, said parameters detector is adapted to collect the communication parameters of each user that connects to said server by monitoring background traffic such as the Transmission Control Protocol TCP between the user and said server.

In this case, the knowledge about the physical media of the subscriber or user can replace the need for probing.

In a preferred characterizing embodiment of the present invention, said telecommunication server is a game server.

The different users are then players that connect to a common game server via the Internet, in order to play a real-time competitive game.

Further characterizing embodiments of the present communication parameters leveler are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a telecommunication network as known from the prior art wherein users are coupled to a telecommunication server, preferably a game server; and
Fig. 2 represents the telecommunication network of Fig. 1 but wherein a communication parameters leveler according to the invention is used.

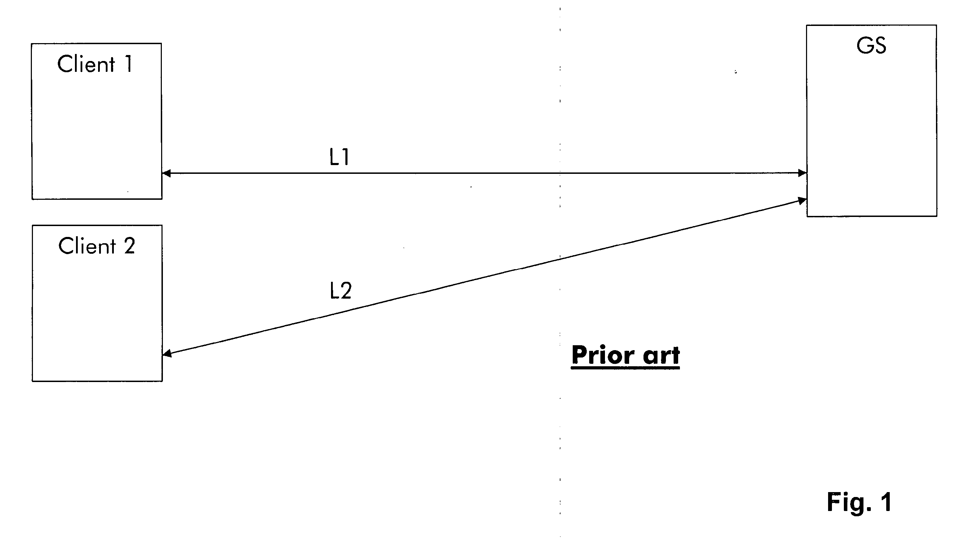

The telecommunication network shown at Fig. 1 comprises a telecommunication server GS coupled to several users Client 1 and Client 2 via telecommunication lines L1 and L2 respectively. The different users Client 1 and Client 2 are connected to the common telecommunication server via the Internet and/or an access network.

The users Client 1 and Client 2 are located at geographically separated locations, so they experience different effective bandwidth, latency, and packet loss in their interactions with the telecommunication server GS, home network technology may play a role as well. This gives some users, e.g. Client 1, an unfair advantage over others, e.g. Client 2, with respect to the quality of their communication with the server GS.

The latter is particularly an issue in case the telecommunication server is a game server GS whereto the users or players Client 1 and Client 2 are connected to play a real-time competitive game. Therefore, although not exclusively reserved to game applications the communication parameters leveler of the present invention is particularly useful in the case of games.

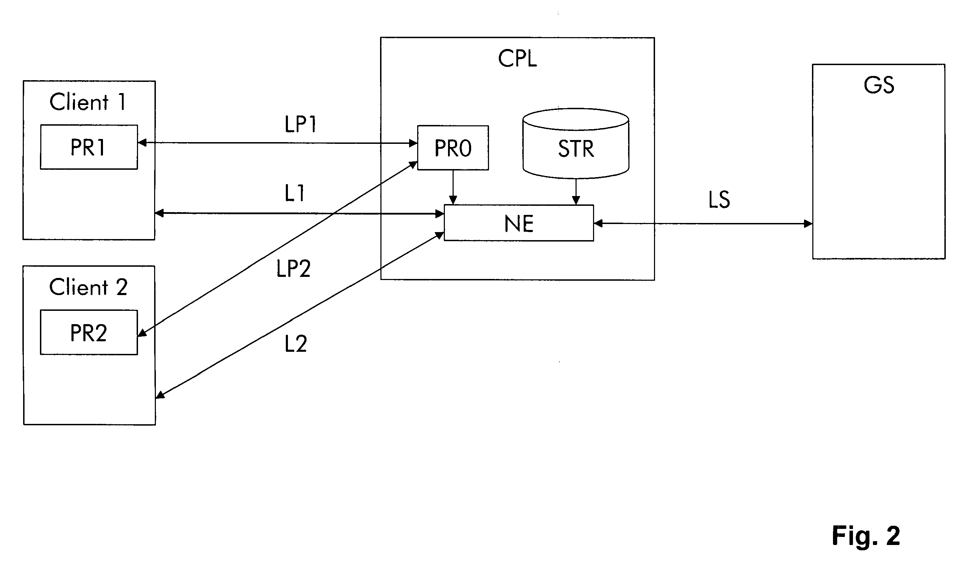

The telecommunication network shown at Fig. 2 comprises a communication parameters leveler CPL connected to the telecommunication server GS via a telecommunication line LS and connected to the users or players Client 1 and Client 2 via respective telecommunication lines L1 and L2.

The communication parameters leveler CPL regulates communication between the users Client 1 and Client 2 and the telecommunication server, preferably game server GS. To this end, the communication parameters leveler CPL comprises a parameters detector PRO for collecting the communication parameters of each user Client 1 and Client 2 that connects to the server GS, a parameters storage device STR for storing the communication parameters of all the users connected to the server, and a network emulator NE for modifying the communication parameters of each user in order to obtain similar communication parameters for all the users coupled to the server GS.

The communication parameters of each user Client 1, Client 2 comprise the effective bandwidth, the latency and/or the Packet Error Rate PER of this user as connected to the server.

The parameters detector generally includes a probe PRO located in the communication parameters leveler CPL and connected via telecommunications lines LP1, LP2 to probe responders PR1, PR2 located in or at least associated to respective users Client 1, Client 2. Each probe responder PR1, PR2 provides to the probe PRO the communication parameters of its associated user Client 1, Client 2.

In another embodiment, instead of actively probing the users, the parameters detector PRO collects the communication parameters of each user Client 1, Client 2 that connects to the server GS by monitoring background traffic, such as the Transmission Control Protocol TCP between the user and the server. The Transmission Control Protocol TCP is a set of rules (protocol) used along with the Internet Protocol IP to send data in the form of message units between computers over the Internet. While IP takes care of handling the actual delivery of the data, TCP takes care of keeping track of the individual units of data (called packets) that a message is divided into for efficient routing through the Internet.

The communication parameters of all the users Client 1 and Client 2 connected to the server GS as collected by the parameters detector PRO are then stored in the parameters storage device STR.

The network emulator NE is coupled to the parameters storage device STR and retrieves therefrom the communication parameters of all the users Client 1 and Client 2 connected to the server GS.

The network emulator NE then detects a first user, e.g. Client 1, showing the relatively worst quality of communication with the server GS and modifies accordingly the communication parameters of all the other users (Client 2) so as to obtain therefore similar communication parameters as those of the first, penalized, underprivileged user Client 1.

In more detail, the network emulator NE modifies the communication parameters of each other user (Client 2) showing a relatively better quality of communication with the server GS than the first user Client 1 by adding additional delay and/or packet loss to the connections of these other users with the server GS.

The communication parameters leveler CPL can thus be seen as a mechanism inserted in the chain between the users Client 1, Client 2 and the server GS to level-out the difference in communication characteristics between the different users. This is particularly advantageous in case the server GS is a game server with which the users or players Client 1, Client 2 can then play a real-time competitive game because the game server GS sees these players with identical communication characteristics.

The communication parameters leveler CPL, also called "handicap leveler", is configured to a certain set of desired characteristics, e.g. representing the 99% worst case of bandwidth, latency, and Packet Error Rate PER that is the number of erroneous packets divided by the total number of packets transmitted, received or processed over a stipulated period.

The communication parameters leveler or handicap leveler CPL can be placed in various places in the network. It could be part of the game server GS, in which case only one instance is needed for all players Client 1, Client 2 and influences from all parts of the network can be leveled.

The communication parameters leveler CPL can also be part of an access node, in which case the knowledge about the physical media of the user or subscriber Client 1, Client 2 can replace the need for probing. There may even be several stages of leveling.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A communication parameters leveler (CPL) for regulating communication between a plurality of users (Client 1, Client 2) and a telecommunication server (GS),
***characterized in that*** said communication parameters leveler comprises
- a parameters detector (PRO) adapted to collect the communication parameters of each user (Client 1, Client 2) that connects to said server (GS),
- a parameters storage device (STR) adapted to store the communication parameters of all the users connected to said server,
- a network emulator (NE) adapted to modify the communication parameters of each user in order to obtain similar communication parameters for all the users coupled to said server.

2. The communication parameters leveler according to claim 1,
***characterized in that*** said network emulator (NE) is coupled to said parameters storage device (STR) for receiving therefrom the communication parameters of all the users (Client 1, Client 2) connected to said server (GS),
***in that*** said network emulator is further adapted detect a first user (Client 1) showing the relatively worst quality of communication with said server (GS),
*and **in that*** said network emulator is adapted to modify the communication parameters of each other user (Client 2) of said plurality so as to obtain similar communication parameters as those of said first user.

3. The communication parameters leveler according to claim 1, ***characterized in that*** said communication parameters comprise the effective bandwidth, the latency and/or the Packet Error Rate PER of the user (Client 1, Client 2) as connected to said server (GS).

4. The communication parameters leveler according to any of the claims 2 or 3, ***characterized in that*** said network emulator (NE) is adapted to modify the communication parameters of each of said other users (Client 2), showing a relatively better quality of communication with said server (GS) than said first user, by adding additional delay and/or packet loss to the connections of said other users with said server.

5. The communication parameters leveler according to claim 1,
***characterized in that*** said parameters detector includes a probe (PRO) connected to a plurality of probe responders (PR1, PR2), each probe responder being associated to a distinct user,
*and **in that*** each probe responder is adapted to provide to said probe the communication parameters of the associated user.

6. The communication parameters leveler according to claim 5,
***characterized in that*** said probe (PRO) is located in said communication parameters leveler (CPL),
*and **in that*** said probe responders (PR1, PR2) are each located at their associated user.

7. The communication parameters leveler according to claim 1, ***characterized in that*** said plurality of users (Client 1, Client 2) is coupled to said server (GS) through a telecommunication network (L1, L2, LS).

8. The communication parameters leveler according to claim 7, ***characterized in that*** said communication parameters leveler (CPL) is located in said telecommunication server (GS)

9. The communication parameters leveler according to claim 7, ***characterized in that*** said communication parameters leveler (CPL) is located in an access node of said telecommunication network (L1, L2, LS).

10. The communication parameters leveler according to claim 1, ***characterized in that*** said parameters detector (PRO) is adapted to collect the communication parameters of each user that connects to said server (GS) by monitoring background traffic such as the Transmission Control Protocol TCP between the user and said server.

11. The communication parameters leveler according to claim 1, ***characterized in that*** said telecommunication server (GS) is a game server.
